# EUROPÄISCHE PATENTSCHRIFT

(11) **EP 1 893 948 B1**
(45) Veröffentlichungstag und Bekanntmachung des Hinweises auf die Patenterteilung: **15.07.2015**
(21) Anmeldenummer: 06763048.3
(22) Anmeldetag: 21.04.2006
(51) Int. Cl.: F02D 41/00, G01D 5/14

(54) **SENSOR ZUR POSITIONSERKENNUNG BEIM START EINER VERBRENNUNGSKRAFTMASCHINE**
SENSOR FOR THE DETECTION OF A POSITION WHEN STARTING AN INTERNAL COMBUSTION ENGINE
DETECTEUR SERVANT A LA DETECTION DE POSITION LORS DU DEMARRAGE D'UN MOTEUR A COMBUSTION INTERNE

(30) Priorität: 15.06.2005 DE 102005027654
(43) Veröffentlichungstag der Anmeldung: 05.03.2008
(73) Patentinhaber: ROBERT BOSCH GMBH, 70442 Stuttgart (DE)
(72) Erfinder: MOESSNER, David, 70372 Stuttgart (DE)
(86) Internationale Anmeldenummer: PCT/EP2006/061728
(87) Internationale Veröffentlichungsnummer: WO 2006/133985

(56) Entgegenhaltungen:
- DE-A1- 4 230 616
- DE-C1- 4 039 062
- DE-C1- 4 334 595
- DE-U1- 20 014 181
- US-A- 5 151 695
- US-A- 5 736 937

## Beschreibung

Die Erfindung betrifft einen Wellenwinkelsensor und ein Wellenwinkelsensorsystem zur Erfassung einer Winkelstellung einer Welle einer Verbrennungskraftmaschine eines Kraftfahrzeugs, insbesondere einer Kurbelwelle oder einer Nockenwelle. Derartige Sensoren werden insbesondere beim Start der Verbrennungskraftmaschine eingesetzt, vorzugsweise um einen Schadstoffausstoß der Verbrennungskraftmaschine zu reduzieren.

### Stand der Technik

Beim Start von Verbrennungskraftmaschinen ist in der Regel die Position der Wellen, insbesondere der Kurbelwelle der Verbrennungskraftmaschine aber auch gegebenenfalls der Nockenwelle, nicht bekannt. Dementsprechend kann auch eine effiziente Motorsteuerung der Verbrennungskraftmaschine in einem Kraftfahrzeug üblicherweise erst nach einigen Umdrehungen der Verbrennungskraftmaschine einsetzen.

Dieses Defizit ist eine Hauptursache dafür, dass die Schadstoffemission, welche von der Verbrennungskraftmaschine ausgeht, beim Start erheblich höher ist als in späteren Betriebsphasen der Verbrennungskraftmaschine.

Üblicherweise wird daher im Stand der Technik versucht, während des Anlassvorganges der Verbrennungskraftmaschine die Position der Kurbel- und/oder Nockenwelle zu erkennen. Dies erfolgt beispielsweise über so genannte Encoder, beispielsweise Encoderräder, welche mit einer umfangsseitigen Anzahl von Zähnen versehen sind. Aus bestimmten Lücken in diesen Zahngrenzen kann beim Anlassen die Position der Welle erkannt werden. Während des Abstellvorgangs kann über eine Auslauferkennung versucht werden, die Position des Motors bis zum Stillstand weiter zu verfolgen. Während des Stillstands hingegen kann eine Veränderung des Motors nicht mehr nachvollzogen werden.

Aus dem Stand der Technik sind verschiedene Typen von Sensoren bekannt, welche zur Erfassung der Winkelstellung einer Kurbel- und/oder Nockenwelle geeignet sind. So ist beispielsweise aus DE 103 38 120 A1 ein magnetischer Multipol-Encoder bekannt, welcher insbesondere zur Winkellagemessung einer Kurbelwelle eines Kraftfahrzeugs eingesetzt werden kann. Der Multipol-Encoder weist eine Magnetspur mit einer streifenförmigen Magnetisierung mit abwechselnder Polung und wenigstens einem Markierungsabschnitt zur Definition einer Referenzlage auf. Der Markierungsabschnitt ist so ausgebildet, dass er einen mittleren Bereich umfasst, welcher nicht oder nur schwach magnetisiert ist, sowie zwei mit gleicher Polung magnetisierte Streifen, die sich beiderseits an den mittleren Bereich anschließen.

Aus der DE 43 34 595 C1 ist ein gattungsbildender Wellenwinkelsensor zur Erfassung der Winkelstellung einer Welle einer Verbrennungskraftmaschine eines Kraftfahrzeugs bekannt.

Die aus dem Stand der Technik bekannten Sensorsysteme weisen jedoch in der Regel eine Vielzahl von Nachteilen auf. Insbesondere besteht ein Nachteil darin, dass viele dieser Sensoren nicht unmittelbar ab dem Start der Verbrennungskraftmaschine die Motorposition erkennen, sondern erst wenn bestimmte Markierungen (beispielsweise der Markierungsabschnitt in der DE 103 38 120 A1) einen entsprechenden Sensor passieren.

Weiterhin sind die aus dem Stand der Technik bekannten Systeme häufig empfindlich gegenüber den hohen thermischen Belastungen, welche an Verbrennungskraftmaschinen im Betrieb auftreten können. Zudem sind in vielen Fällen die Sensorsysteme äußerst bauraumaufwendig und verlangen eine aufwendige Energiezufuhr. Aufgrund des beschränkten Raumangebots, insbesondere im Zylinderkopfbereich von Verbrennungskraftmaschinen, ist dieser erhöhte Platzbedarf durch derartige Sensoren in vielen Fällen nicht tolerierbar.

### Vorteile der Erfindung

Es wird daher ein Wellenwinkelsensor zur Erfassung einer Winkelstellung einer Welle einer Verbrennungskraftmaschine eines Kraftfahrzeugs, insbesondere einer Kurbelwelle oder einer Nockenwelle vorgeschlagen, welcher die Nachteile der aus dem Stand der Technik bekannten Systeme vermeidet. Weiterhin wird ein Wellenwinkelsensorsystem vorgeschlagen, welches einen erfindungsgemäßen Wellenwinkelsensor und eine Basisstation aufweist. Bevorzugt wird der vorgeschlagene Wellenwinkelsensor und das Wellenwinkelsensorsystem zur Erfassung einer Winkelstellung einer Kurbelwelle eingesetzt, wobei jedoch auch der Einsatz für die Erfassung einer Winkelstellung einer Nockenwelle möglich ist.

Der Wellenwinkelsensor umfasst ein magnetisches Geberelement und ein Magnetsensorelement. Weiterhin kann der Wellenwinkelsensor ein Gehäuse umfassen, vorzugsweise ein hermetisch dichtes Gehäuse, welches verhindert, dass Verschmutzungen in den Innenraum des Gehäuses eindringen könnten, welche das Sensorsystem beeinträchtigen könnten. Das Gehäuse kann beispielsweise fest oder drehbar auf der Kurbelwelle oder Nockenwelle angeordnet sein und kann sich somit entweder mit der Welle mitdrehen oder auch während der Drehung der Welle ruhen. Verschiedene Ausgestaltungen sind denkbar. Entweder das magnetische Geberelement oder das Magnetsensorelement ist fest mit der Welle verbindbar. Dies bedeutet, dass das eine der beiden Elemente dazu bestimmt ist, sich mit der Welle mitzudrehen. Das jeweils andere Element kann beispielsweise fest mit dem Gehäuse verbunden werden, falls sich das Gehäuse nicht mit der Welle mitdreht. Erfindungsgemäß ist das jeweils andere Element mit einer selbstausrichtenden Pendelvorrichtung verbunden. Diese erfindungsgemäße selbstausrichtende Pendelvorrichtung ist um eine zu einer Wellenachse parallele Achse drehbar gelagert. Insbesondere bei einem Motorstillstand der Verbrennungskraftmaschine richtet sich die selbstausrichtende Pendelvorrichtung selbst aus.

Das Magnetsensorelement erzeugt in Zusammenwirkung mit dem magnetischen Geberelement mindestens ein Winkelsignal über eine Winkelstellung der Welle. Erfindungsgemäß wird dieses Winkelsignal mittels einer Sendevorrichtung drahtlos an eine Basisstation, welche neben dem Wellenwinkelsensor Bestandteil des Wellenwinkelsensorsystems ist, übertragbar.

Das Magnetsensorelement und das magnetische Geberelement können auf verschiedene Weise ausgestaltet sein. Zum einen kann das magnetische Geberelement wiederum ein segmentiertes Geberrad aufweisen, wie beispielsweise in der DE 103 38 120 A1. Da mit derartigen segmentierten magnetischen Geberelementen jedoch vergleichsweise komplexe magnetische Felder erzeugt werden, welche sich überwiegend zur Erfassung von Drehzahlen eignen, ist es jedoch bevorzugt, wenn das magnetische Geberelement einen magnetischen Dipol aufweist. Insbesondere kann das magnetische Geberelement eine einfache magnetische Dipolscheibe sein, welche beispielsweise auf die Welle aufgebracht wird.

Als Sensorprinzip kann beispielsweise der Hall-Effekt eingesetzt werden. Alternativ und bevorzugt werden jedoch magnetoresistive Sensoreffekte ausgenutzt. Bei derartigen aus dem Stand der Technik bekannten Sensorprinzipien wird eine Widerstandsmessung als Funktion eines magnetischen Feldes detektiert. Insbesondere kann dabei auch die Richtung des magnetischen Feldes detektiert werden, wodurch auch ein einfacher magnetischer Dipol für eine derartige Messung genügt. Beispielsweise kann dabei der sogenannte anisotropische magnetoresistive Effekt ausgenutzt werden (anisotropic magneto-resistive effect, AMR-Effekt). Alternativ oder zusätzlich kann auch der sogenannte gigantische magnetoresistive Effekt (GMR-Effekt) ausgenutzt werden. Derartige Sensorprinzipien sind dem Fachmann aus anderen Bereichen der Technik bekannt.

Erfindungsgemäß soll der Wellenwinkelsensor und das Wellenwinkelsensorsystem zur Positionserkennung der Verbrennungskraftmaschine beim Start eingesetzt werden. Dementsprechend muss eine Winkelstellung der Welle insbesondere beim Stillstand der Verbrennungskraftmaschine erfolgen. Das Wellenwinkelsensorsystem kann daher vorzugsweise ein Stillstandserkennungssystem aufweisen, welches einen Stillstand der Verbrennungskraftmaschine erkennt. Wenn ein Stillstand erkannt wird, so kann unmittelbar oder wahlweise auch nach einer bestimmten zeitlichen Verzögerung, ein Winkelsignal drahtlos zur Basisstation übertragen werden. Vorzugsweise wird dabei genau ein Winkelsignal übertragen, um eine überflüssige Übertragung von Daten zu vermeiden. Vorzugsweise wird ausschließlich bei Stillstand ein Winkelsignal zur Basisstation übertragen.

Das erfindungsgemäße Stillstandserkennungssystem kann beispielsweise derart ausgestaltet sein, dass in vorgegebenen zeitlichen Abständen Winkelsignale erfasst werden. Unterscheiden sich aufeinanderfolgende Winkelsignale um nicht mehr als einen vorgegebenen Toleranzwinkel, so detektiert das Stillstandserkennungssystem automatisch einen Stillstand.

Die oben beschriebene erfindungsgemäße selbstausrichtende Pendelvorrichtung weist vorzugsweise ein Pendelgewicht auf Beispielsweise kann dieses Pendelgewicht als überlanger Pendelarm ausgestaltet sein, welcher die Pendelvorrichtung automatisch in die Vertikale dreht. Diese Ausrichtung kann bereits während des Betriebes des Verbrennungsmotors erfolgen, oder auch erst beim Auslaufen des Motors nach Abschalten. In einer bevorzugten Ausgestaltung der Pendelvorrichtung kann das Pendelgewicht die Sendevorrichtung ganz oder teilweise umfassen. Auf diese Weise wird das Gewicht und Volumen der Sendevorrichtung gleichzeitig zum Ausrichten der selbstausrichtenden Pendelvorrichtung genutzt, was Bauraum und Gewicht einspart.

Die selbstausrichtende Pendelvorrichtung dreht sich bei Motorstillstand automatisch in eine durch die Gravitation vorgegebene Position. Diese durch die Gravitation vorgegebene Position kann beispielsweise ein Umgebungssystem des Kraftfahrzeugs zumindest teilweise definieren, Dieses Umgebungssystem muss jedoch nicht mit dem Kraftfahrzeug-Koordinatensystem übereinstimmen, da beispielsweise das Kraftfahrzeug in einer Schrägstellung zum Stillstand gekommen sein kann. Beispielsweise kann das Kraftfahrzeug auf einer abschüssigen Straße geparkt sein.

Dementsprechend kann das Wellenwinkelsensorsystem erfindungsgemäß dahingehend weitergebildet werden, dass zusätzlich ein Neigungswinkelerkennungssystem vorgesehen ist. Derartige Neigungswinkelerkennungssysteme sind aus dem Stand der Technik bekannt. Beispielsweise können derartige Systeme wieder mit entsprechenden Pendelvorrichtungen arbeiten. Mittels des zusätzlichen Neigungswinkelerkennungssystems kann erfindungsgemäß das mindestens eine Winkelsignal, welches nach Stillstand der Verbrennungskraftmaschine generiert wurde, bezüglich der Neigung des Kraftfahrzeug-Koordinatensystems korrigiert werden. Auf diese Weise können Umgebungssystem und Kraftfahrzeug-Koordinatensystem gegeneinander abgeglichen werden, wodurch wiederum die exakte Winkelstellung der Welle berechnet werden kann.

Der drahtlose Datenaustausch zwischen der Sendevorrichtung und der Basisstation kann insbesondere dadurch erfolgen, dass Basisstation und Sendevorrichtung entsprechende elektromagnetische Schwingkreise zur Emission beziehungsweise zum Empfang elektromagnetischer Wellen aufweisen. Derartige Systeme können mit äußerst geringem Bauvolumen ausgestattet sein, was beispielsweise aus der Transpondertechnologie bekannt ist. Insbesondere sind für den Datenaustausch in vielen Fällen lediglich kleine, beispielsweise gedruckte Schaltungen erforderlich, beispielsweise in Form von auf ein Substrat aufgedruckten Antennenspiralen und entsprechender zusätzlicher Elemente.

Der Austausch elektromagnetischer Wellen kann zwischen Sendevorrichtung und Basisstation unidirektional oder bidirektional erfolgen. Insbesondere kann durch ein erstes Signal der Basisstation die Sendevorrichtung angeregt werden, ein Messsignal zu übertragen. Somit kann beispielsweise die Entscheidung, ob ein Motorstillstand vorliegt, in die Basisstation oder eine mit der Basisstation verbundene Vorrichtung "ausgelagert" werden. Insbesondere kann ein Motorsteuerungsgerät in das Wellenwinkelsensorsystem eingebunden sein.

Die Ausgestaltung von Basisstation und Sendevorrichtung kann beispielsweise analog zu aus dem Stand der Technik bekannten Reifendruck-Überwachungssystemen ausgestaltet sein. Derartige Systeme sind beispielsweise in DE 10 2004 019 858 A1 beschrieben. Insbesondere kann das Wellenwinkelsensorsystem auch derart ausgestaltet sein, dass die Sendevorrichtung nicht mit einer eigenen Energieversorgung ausgestattet ist oder nur mit einer geringen (beispielsweise einer Notfall-)Energieversorgung. Dementsprechend kann elektromagnetische Energie für den Betrieb des Sensors von der Basisstation über elektromagnetische Wellen zu der mindestens einen Sendevorrichtung drahtlos übertragen werden. Dort kann beispielsweise diese elektromagnetische Energie zum Aufladen eines Kondensators oder eines ähnlichen Energiespeichers genutzt werden, welcher die Energieversorgung des Sendevorgangs und/oder der Magnetfeldmessung sicherstellt.

Der erfindungsgemäße Wellenwinkelsensor und das erfindungsgemäße Wellenwinkelsensorsystem weisen gegenüber aus dem Stand der Technik bekannten Systemen zahlreiche Vorteile auf. So wird insbesondere ein kompaktes, störungsunanfälliges System zur Verfügung gestellt, welches eine Absolutwinkelmessung eines Wellenwinkels ermöglicht. Dementsprechend ist beim Start die Motorposition, welche beispielsweise durch Winkelstellung der Kurbel- und/oder Nockenwelle definiert ist, bekannt. Diese Positionsdaten können von einer Motorsteuerung genutzt werden, um den Motorsteuerungsvorgang zu optimieren. Dementsprechend lassen sich mittels des erfindungsgemäßen Systems Schadstoffemissionen insbesondere beim Start der Verbrennungskraftmaschine gegenüber herkömmlichen Systemen stark vermindern.

Neben einer Winkelerkennung beim Start kann der beschriebene Wellenwinkelsensor natürlich auch zur Drehzahlermittlung während des Betriebs der Verbrennungskraftmaschine genutzt werden. Ein zusätzliches System, beispielsweise über die oben beschriebenen Encoderräder, ist nicht erforderlich.

Durch die erfindungsgemäße drahtlose Signalübertragung zwischen Sendevorrichtung und Basisstation lässt sich erheblicher Bauraum einsparen. Insbesondere ist keine Steckverbindung zum Gehäuse mehr erforderlich, welche in den im Stand der Technik entsprechenden Systemen üblicherweise viel Platz einnimmt und den Einsatz derartiger Magnetsensoren bislang weitgehend verhindert hat.

Da weiterhin erfindungsgemäß auch auf eine interne Energieversorgung oder eine Energieversorgung über entsprechende Kabel verzichtet werden kann, wird zusätzlicher Bauraum eingespart. Alternativ oder zusätzlich kann jedoch auch ein eigener Energiespeicher (zum Beispiel ein Akkumulator oder eine Batterie) innerhalb des Sensorgehäuses vorgesehen sein. Auch über eine Relativbewegung der selbstausrichtenden Pendelvorrichtung, beispielsweise relativ zum Gehäuse oder zu einem anderen Bezugspunkt, beispielsweise einem mit der Fahrzeugkarosserie verbundenen Bezugspunkt, könnte eine Energieversorgung realisiert werden, indem beispielsweise eine Spannung induziert wird. Über diese induzierte Spannung könnte z. B. ein Akkumulator aufgeladen werden. Insgesamt ist festzustellen, dass bei der erfindungsgemäßen Weiterbildung, bei welcher lediglich im Stillstand einmalig ein Winkelsignal übertragen wird, ein besonders geringer Energiebedarf vorliegt.

### Zeichnung

Anhand der Zeichnung wird die Erfindung nachstehend näher erläutert.

Es zeigt:

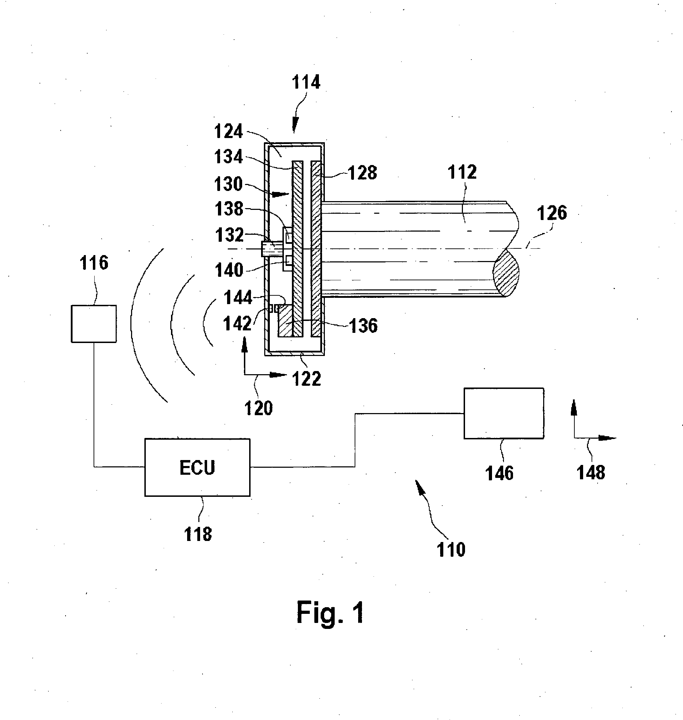

- Figur 1: ein Ausführungsbeispiel eines erfindungsgemäßen Wellenwinkelsensorssystems zur Bestimmung einer Winkelstellung einer Kurbelwelle.

### Ausführungsbeispiel

In Figur 1 ist ein bevorzugtes Ausführungsbeispiel eines erfindungsgemäßen Wellenwinkelsensorssystems 110 zur Erfassung einer Winkelstellung einer Kurbelwelle 112 dargestellt. Das Wellenwinkelsensorsystem 110 weist im Wesentlichen drei Einheiten auf: eine bevorzugte Ausgestaltung eines erfindungsgemäßen Wellenwinkelsensors 114 (im Folgenden als "Sensoreinheit" bezeichnet), eine Basisstation 116 und ein Motorsteuerungsgerät (Engine Control Unit, ECU) 118. Die Sensoreinheit 114 weist ein Gehäuse 122 auf, welches beispielsweise an der Kurbelwelle 112 festgelegt ist. Das Gehäuse 122 weist einen Innenraum 124 auf, welcher durch das Gehäuse 122 hermetisch gegen Eindringen von Schmutz und Feuchtigkeit abgeschirmt ist.

In Figur 1 ist weiterhin symbolisch ein Kraftfahrzeug-Koordinatensystem 120 dargestellt. Die Kurbelwelle 112 dreht sich in diesem Kraftfahrzeug-Koordinatensystem 120 um eine Kurbelwellenachse 126. An ihrem der Sensoreinheit 114 zugewandten Ende ist die Kurbelwelle 112 fest mit einer magnetischen Dipolscheibe 128 verbunden. Dreht sich die Kurbelwelle 112 um ihre Kurbelwellenachse 126, so rotiert diese magnetische Dipolscheibe 128 ebenfalls um die Kurbelwellenachse 126. Dementsprechend rotiert auch das von der magnetischen Dipolscheibe 128 erzeugte magnetische Feld. Die magnetische Dipolscheibe 128 ist im Innenraum 124 des Gehäuses 122 aufgenommen, wobei die Aufnahme derart erfolgt, dass der Übergang zwischen Gehäuse 122 und Kurbelwelle 112 abgedichtet ist, um ein Eindringen von Schmutz und Feuchtigkeit zu verhindern.

Weiterhin ist im Innenraum 124 des Gehäuses 122 eine selbstausrichtende Pendelvorrichtung 130 aufgenommen. Die selbstausrichtende Pendelvorrichtung 130 ist mittels einer Pendelachse 132 mit dem Gehäuse 122 verbunden, ist jedoch relativ zum Gehäuse 122 drehbar gelagert. Dabei ist die Pendelachse 132 parallel zur Kurbelwellenachse 126 ausgerichtet, so dass eine Drehung der selbstausrichtenden Pendelvorrichtung 130 parallel zur Drehung der Kurbelwelle 112 erfolgen kann.

Die selbstausrichtende Pendelvorrichtung 130 weist ein Magnetsensorelement 134 und eine Sendevorrichtung 136 auf. Das Magnetsensorelement ist in diesem Ausführungsbeispiel als AMR-Sensor ausgestaltet und weist zusätzlich eine Auswerteelektronik 138 auf, welche nahe der Pendelachse 132 gelagert ist. Das Magnetsensorelement 134 ist ausgestaltet, um über den AMR-Effekt eine Ausrichtung des von der magnetischen Dipolscheibe 128 generierten magnetischen Feldes und somit eine Winkelstellung der Kurbelwelle 112 relativ zum Magnetsensorelement 134 zu messen.

Weiterhin weist die selbstausrichtende Pendelvorrichtung 130 ein Stillstandserkennungssystem 140 auf. Dieses Stillstandserkennungssystem 140 vergleicht mittels des Magnetsensorelementes 134 und der Auswerteelektronik 138 ermittelte Winkelstellungen der magnetischen Dipolscheibe 128 zu fest vorgegebenen oder variabel vorgegebenen Zeitpunkten. Erkennt das Stillstandserkennungssystem 140, dass sich diese Winkelstellungen zu benachbarten Zeitpunkten nicht unterscheiden, so wird automatisch festgestellt, dass ein Stillstand der Verbrennungskraftmaschine vorliegt.

Auswerteelektronik 138 und Stillstandserkennungssystem 140 sind mit der Sendevorrichtung 136 verbunden. Die Sendevorrichtung 136 weist einen elektromagnetischen Schwingkreis sowie einen Kondensator auf, welcher als elektrischer Energiespeicher dient.

Weiterhin weist das Wellenwinkelsensorsystem 110 eine Basisstation 116 auf, welche wiederum mit dem Motorsteuerungsgerät 118 verbunden ist. Beispielsweise ist die Basisstation 116 an einer Stelle im Kraftfahrzeug aufgenommen, von welcher aus ungestört elektromagnetische Wellen zur Sendevorrichtung 136 übertragen und von dieser empfangen werden können. Dementsprechend ist die Basisstation 116 vorzugsweise in räumlicher Nähe zur Sensoreinheit 114 im Kraftfahrzeug aufgenommen. Gleichzeitig kann die Basisstation 116 an einer Stelle im Kraftfahrzeug aufgenommen sein, an welcher die Basisstation 116 nicht mit hoher thermischer Belastung durch die Verbrennungskraftmaschine beaufschlagt ist. Dementsprechend kann insbesondere in der Basisstation 116 empfindlichere Elektronik aufgenommen sein als in der Sensoreinheit 114.

Der Austausch von elektromagnetischen Wellen erfolgt in diesem Ausführungsbeispiel bidirektional zwischen Basisstation 116 und Sendevorrichtung 136. Insbesondere wird vorzugsweise die Sendevorrichtung 136 in regelmäßigen Abständen von der Basisstation 116 mit elektromagnetischen Wellen beaufschlagt, deren elektromagnetische Energie in dem beschriebenen Kondensator der Sendevorrichtung 136 gespeichert werden kann. Auf diese Weise wird regelmäßig eine Energieversorgung der Sensoreinheit 114 sichergestellt. Gleichzeitig kann beispielsweise auch die Basisstation 116 die Sensoreinheit 114 zu einer entsprechenden Messung der Winkelstellung der Kurbelwelle 112 und/oder einer Übermittlung entsprechender Daten anregen.

Weiterhin weist die Sensoreinheit 114 einen Permanentmagneten 142 auf, welcher fest mit dem Gehäuse 122 verbunden ist. Als Gegenstück zum Permanentmagneten 142 ist an der selbstausrichtenden Pendelvorrichtung 130 im Bereich der Sendevorrichtung 136 eine Induktionsspule 144 befestigt. Bewegt sich die selbstausrichtende Pendelvorrichtung 130 um ihre Pendelachse 132, so wird von dem Permanentmagneten 142 in der Induktionsspule 144 ein Strom induziert. Dieser Strom kann genutzt werden, um einen elektrischen Energiespeicher in der selbstausrichtenden Pendelvorrichtung 130, beispielsweise den oben bereits beschriebenen Kondensator oder einen zusätzlichen Akkumulator, mit elektrischer Energie aufzuladen.

Weiterhin weist das Wellenwinkelsensorsystem 110 in diesem Ausführungsbeispiel gemäß Figur 1 ein zusätzliches Neigungswinkelerkennungssystem 146 auf. Dieses Neigungswinkelerkennungssystem erkennt die Neigung des Kraftfahrzeugs, insbesondere die Neigung des Kraftfahrzeug-Koordinatensystems 120, relativ zu einem Umgebungssystem 148 (in Figur 1 symbolisch dargestellt). Das Neigungswinkelerkennungssystem 146 kann beispielsweise wiederum auf bekannten Prinzipien, wie beispielsweise Pendelprinzipien, basieren und kann auch anderweitig im Kraftfahrzeug genutzt werden, beispielsweise um eine Federung des Kraftfahrzeugs auf die Neigung des Kraftfahrzeugs zur Umgehung einzustellen.

Da sich die selbstausrichtende Pendelvorrichtung 130 im Stillstand des Kraftfahrzeugs aufgrund der auf die selbstausrichtende Pendelvorrichtung 130 einwirkenden Gewichtskraft relativ zum Umgebungssystem 148 einstellen wird, nicht hingegen relativ zum Kraftfahrzeug-Koordinatensystem 120, kann - beispielsweise in der Motorsteuerung 118 - das von der Sensoreinheit 114 übermittelte Winkelsignal der Winkelstellung der Kurbelwelle 112 entsprechend in ein Winkelsignal relativ zum Kraftfahrzeug-Koordinatensystem 120 umgerechnet werden. Dieses Signal relativ zum Kraftfahrzeug-Koordinatensystem 120 wird als Information beim Start der Verbrennungskraftmaschine benötigt.

### Bezugszeichenliste

- 110: Wellenwinkelsensorsystem
- 112: Kurbelwelle
- 114: Sensoreinheit, Wellenwinkelsensor
- 116: Basisstation
- 118: Motorsteuerungsgerät
- 120: Kraftfahrzeug-Koordinatensystem
- 122: Gehäuse
- 124: Innenraum
- 126: Kurbelwellenachse
- 128: magnetische Dipolscheibe
- 130: selbstausrichtende Pendelvorrichtung
- 132: Pendelachse
- 134: Magnetsensorelement
- 136: Sendevorrichtung
- 138: Auswerteelektronik
- 140: Stillstandserkennungssystem
- 142: Permanentmagnet
- 144: Induktionsspule
- 146: Neigungswinkelerkennungssystem
- 148: Umgebungssystem

## Patentansprüche

1. Wellenwinkelsensor (114) zur Erfassung einer Winkelstellung einer Welle (112) einer Verbrennungskraftmaschine eines Kraftfahrzeugs, insbesondere einer Kurbelwelle (112) oder einer Nockenwelle, mit einem magnetischen Geberelement (128) und einem Magnetsensorelement (134), wobei entweder das magnetische Geberelement (128) oder das Magnetsensorelement (134) fest mit der Welle (112) verbindbar ist und wobei das Magnetsensorelement (134) mindestens ein Winkelsignal erzeugt und das mindestens eine Winkelsignal mittels einer Sendevorrichtung (136) drahtlos an eine Basisstation (116) übertragen wird, **dadurch gekennzeichnet, dass** das nicht zur Verbindung mit der Welle (112) vorgesehene Element der aus dem Magnetsensorelement (134) und dem magnetischen Geberelement (128) bestehenden Gruppe mit einer selbstausrichtenden Pendelvorrichtung (130) verbunden ist, wobei die selbstausrichtende Pendelvorrichtung (130) um eine zu einer Wellenachse (126) parallele Achse (132) drehbar gelagert ist.

2. Wellenwinkelsensor (114) gemäß Anspruch 1, **dadurch gekennzeichnet, dass** die selbstausrichtende Pendelvorrichtung (130) ein Pendelgewicht aufweist, wobei das Pendelgewicht die Sendevorrichtung (136) umfasst.

3. Wellenwinkelsensor (114) gemäß einem der vorhergehenden Ansprüche, **gekennzeichnet durch** eine Induktionsvorrichtung (142, 144), wobei mittels der Induktionsvorrichtung (142, 144) **durch** eine Relativbewegung der selbstausrichtenden Pendelvorrichtung (130) relativ zu einem Gehäuse (122) eine elektrische Energie erzeugbar und in einem elektrischen Energiespeicher speicherbar ist.

4. Wellenwinkelsensor (114) gemäß einem der vorhergehenden Ansprüche, **dadurch gekennzeichnet, dass** das Magnetsensorelement (134) mindestens einen der folgenden Sensoren aufweist: einen Hall-Sensor, einen magnetoresistiven Sensor, insbesondere einen GMR-Sensor und/oder einen AMR-Sensor.

5. Wellenwinkelsensorsystem (110), enthaltend einen Wellenwinkelsensor (114) gemäß einem der vorhergehenden Ansprüche und mindestens eine Basisstation (116).

6. Wellenwinkelsensorsystem (110) gemäß Anspruch 5, **gekennzeichnet durch** ein Stillstandserkennungssystem (140), wobei das Stillstandserkennungssystem (140) einen Stillstand der Verbrennungskraftmaschine erkennt und der Wellenwinkelsensor ausgestaltet ist, um das mindestens eine Winkelsignal vom Wellenwinkelsensor (114) zur Basisstation (116) zu übertragen, wenn ein Stillstand erkannt wird.

7. Wellenwinkelsensorsystem (110) gemäß Anspruch 6, **dadurch gekennzeichnet, dass** der Wellenwinkelsensor (114) ausgestaltet ist, um das mindestens eine Winkelsignal nur zur Basisstation (116) zu übertragen, wenn ein Stillstand erkannt wird.

8. Wellenwinkelsensorsystem (110) gemäß Anspruch 6 oder 7, **dadurch gekennzeichnet, dass** das Stillstandserkennungssystem (140) in vorgegebenen zeitlichen Abständen Winkelsignale erfasst und einen Stillstand erkennt, wenn sich diese Winkelsignale um nicht mehr als einen vorgegebenen Toleranzwinkel unterscheiden.

9. Wellenwinkelsensorsystem (110) gemäß einem der Ansprüche 5 bis 8, **dadurch gekennzeichnet, dass** der Wellenwinkelsensor ausgestaltet ist, um genau ein Winkelsignal zu übertragen.

10. Wellenwinkelsensorsystem (110) gemäß einem der Ansprüche 8 oder 9, **gekennzeichnet durch** ein zusätzliches Neigungswinkelerkennungssystem (146), wobei das Neigungswinkelerkennungssystem (146) eine Neigung des Kraftfahrzeug-Koordinatensystems (120) relativ zu einem Umgebungssystem (148) beim Stillstand des Kraftfahrzeugs erkennt und das mindestens eine Winkelsignal bezüglich der Neigung des Kraftfahrzeug-Koordinatensystems (120) korrigiert.

11. Wellenwinkelsensorsystem (110) gemäß einem der Ansprüche 5 bis 10, **dadurch gekennzeichnet, dass** die Sendevorrichtung (136) von der Basisstation (116) und/oder einer Versorgungsstation drahtlos mit Energie versorgt wird.

## Claims

1. Shaft angle sensor (114) for detecting an angular position of a shaft (112) of an internal combustion engine of a motor vehicle, in particular of a crankshaft (112) or of a camshaft, having a magnetic signal transmitter element (128) and a magnetic sensor element (134), wherein either the magnetic signal transmitter element (128) or the magnetic sensor element (134) can be connected permanently to the shaft (112), and wherein the magnetic sensor element (134) generates at least one angle signal, and the at least one angle signal is transmitted in a wireless fashion to a base station (116) by means of a transmitter device (136), **characterized in that** the element, which is not provided for connecting to the shaft (112), of the group composed of the magnetic sensor element (134) and the magnetic signal transmitter element (128) is connected to a self-orienting pendulum device (130), wherein the self-orienting pendulum device (130) is mounted so as to be rotatable about an axis (132) which is parallel to a shaft axis (126).

2. Shaft angle sensor (114) according to Claim 1, **characterized in that** the self-orienting pendulum device (130) has a pendulum weight, wherein the pendulum weight comprises the transmitter device (136).

3. Shaft angle sensor (114) according to one of the preceding claims, **characterized by** an induction device (142, 144), wherein electrical energy can be generated by means of the induction device (142, 144) by means of a relative movement of the self-orienting pendulum device (130) relative to a housing (122), and can be stored in an electrical energy accumulator.

4. Shaft angle sensor (114) according to one of the preceding claims, **characterized in that** the magnet sensor element (134) has at least one of the following sensors: a Hall sensor, a magnetoresistive sensor, in particular a GMR sensor, and/or a AMR sensor.

5. Shaft angle sensor system (110), containing a shaft angle sensor (114) according to one of the preceding claims and at least one base station (116).

6. Shaft angle sensor system (110) according to Claim 5, **characterized by** a stationary-state detection system (140), wherein the stationary-state detection system (140) detects a stationary state of the internal combustion engine, and the shaft angle sensor is configured to transmit the at least one angle signal from the shaft angle sensor (114) to the base station (116) if a stationary state is detected.

7. Shaft angle sensor system (110) according to Claim 6, **characterized in that** the shaft angle sensor (114) is configured to transmit the at least one angle signal only to the base station (116) if a stationary state is detected.

8. Shaft angle sensor system (110) according to Claim 6 or 7, **characterized in that** the stationary-state detection system (140) senses angle signals at predefined time intervals and detects a stationary state if these angle signals differ by not more than a predefined tolerance angle.

9. Shaft angle sensor system (110) according to one of Claims 5 to 8, **characterized in that** the shaft angle sensor is configured to transmit precisely one angle signal.

10. Shaft angle sensor system (110) according to one of Claims 8 and 9, **characterized by** an additional inclination-angle detection system (146), wherein the inclination-angle detection system (146) detects an inclination of the motor-vehicle coordinate system (120) relative to a surroundings system (148) during the stationary state of the motor vehicle and corrects the at least one angle signal with respect to the inclination of the motor-vehicle coordinate system (120).

11. Shaft angle sensor system (110) according to one of Claims 5 to 10, **characterized in that** the transmitter device (136) is supplied with energy in a wireless fashion by the base station (116) and/or a supply station.

## Revendications

1. Sonde (114) d'angle d'arbre destiné à saisir la position angulaire d'un arbre (112) d'un moteur à combustion interne d'un véhicule automobile, en particulier du vilebrequin (112) ou d'un arbre à cames,
la sonde présentant un élément magnétique d'émission (128) et un élément magnétique de saisie (134),
l'élément magnétique d'émission (128) ou l'élément magnétique de saisie (134) pouvant être raccordés solidairement à l'arbre (112) et l'élément magnétique de saisie (134) formant au moins un signal d'angle,
le ou les signaux d'angle étant transmis sans fil à un poste de base (116) au moyen d'un ensemble d'émission (136),
**caractérisée en ce que**
l'élément du groupe constitué par l'élément magnétique de saisie (134) et l'élément magnétique d'émission (128) non prévu pour être raccordé à l'arbre (112) est raccordé à un ensemble pendulaire (130) à auto-alignement, l'élément pendulaire (130) à auto-alignement étant monté à rotation autour d'un axe parallèle (132) à un axe (126) de l'arbre.

2. Sonde (114) d'angle d'arbre selon la revendication 1, **caractérisée en ce que** l'ensemble pendulaire (130) à auto-alignement présente un poids pendulaire, le poids pendulaire comportant l'ensemble d'émission (136).

3. Sonde (114) d'angle d'arbre selon l'une des revendications précédentes, **caractérisée par** un ensemble d'induction (142, 144), de l'énergie électrique pouvant être formée au moyen de l'ensemble d'induction (142, 144) par un déplacement relatif entre l'ensemble pendulaire (130) à auto-alignement et un boîtier (122) et pouvant être conservée dans un accumulateur d'énergie électrique.

4. Sonde (114) d'angle d'arbre selon l'une des revendications précédentes, **caractérisée en ce que** l'élément magnétique (134) de saisie présente l'un des capteurs suivants : un capteur de Hall, un capteur magnétorésistif, en particulier un capteur GMR et/ou un capteur AMR.

5. Système (110) de sonde d'angle d'arbre contenant une sonde (114) d'angle d'arbre selon l'une des revendications précédentes et au moins un poste de base (116).

6. Système (110) de sonde d'angle d'arbre selon la revendication 5, **caractérisé par** un système (140) de détection de l'arrêt, le système (140) de détection de l'arrêt détectant l'arrêt du moteur à combustion interne et la sonde d'angle d'arbre étant configurée pour transmettre le ou les signaux d'angle du capteur (114) d'angle d'arbre au poste de base (116) lorsqu'un arrêt est détecté.

7. Système (110) de sonde d'angle d'arbre selon la revendication 6, **caractérisé en ce que** la sonde (114) d'angle d'arbre est configurée pour transmettre le ou les signaux d'angle au poste de base (116) uniquement lorsqu'un arrêt a été détecté.

8. Système (110) de sonde d'angle d'arbre selon les revendications 6 ou 7, **caractérisé en ce que** le système (140) de détection d'arrêt saisit des signaux d'angle à des intervalles temporels prédéterminés et détecte un arrêt lorsque les signaux d'angle ne diffèrent pas plus qu'un angle de tolérance prédéterminé.

9. Système (110) de sonde d'angle d'arbre selon l'une des revendications 5 à 8, **caractérisé en ce que** la sonde d'angle d'arbre est configurée pour transmettre exactement un signal d'angle.

10. Système (110) de sonde d'angle d'arbre selon l'une des revendications 8 ou 9, **caractérisé par** un système supplémentaire (146) de détection d'angle d'inclinaison, le système (146) de détection d'angle d'inclinaison détectant une inclinaison du système (120) de coordonnées du véhicule automobile par rapport à un système environnant (148) lors de l'arrêt du véhicule automobile et corrigeant le ou les signaux d'angle de l'inclinaison du système (120) de coordonnées du véhicule automobile.

11. Système (110) de sonde d'angle d'arbre selon l'une des revendications 5 à 10, **caractérisé en ce que** l'ensemble d'émission (136) est alimenté sans fil en énergie par le poste de base (116) et/ou par un poste d'alimentation.
